# EUROPEAN PATENT APPLICATION

(11) **EP 3 078 789 A1**
(43) Date of publication of application: **12.10.2016**
(21) Application number: 15178962.5
(22) Date of filing: 29.07.2015
(51) Int. Cl.: E04H 4/16, A46B 3/00, B08B 1/00, B25G 3/18, F16B 7/04

(54) **RETAINING MECHANISM FOR TELESCOPING POLE**

(30) Priority: 06.04.2015 US 201514679211
(71) Applicant: CPA Pool Products, Inc., Blainville, Québec J7C 4G6 (CA)
(72) Inventor: Larouche, Annie, Mascouche, Québec J7L 3V3 (CA)
(74) Representative: Cowley, Catherine Mary

(57) **Abstract**

Retaining mechanism for a telescopic pole that comprises a lever, biased by a deformable material, which causes a retaining pin to engage an inner pole. Such that when said deformable material is compressed, the retaining pin disengages said inner pole allowing the pole to telescope accordingly.

## Description

### I. Background

### A. Field of Invention

The present invention generally relates to telescopic poles, in particular, the present invention is a retaining mechanism thereto.

### B. Description of the Related Art

Telescopic poles are well-known especially for use as an implement for the maintenance of swimming pools. Unlike other general applications where an extension pole is useful, use of implements in a swimming pool are typically conducted with tool being applied in a downward or horizontal direction.

A telescopic pole is typically hollow, and may generally comprise at least two poles that consist of different diameters, such that an inner pole may telescope relative to an outer pole, whereby the inner pole may be completely and or partially surrounded by an outer pole in a retracted state and partially and or fully exposed in an extended state. A retaining mechanism is typically provided so that the inner pole and outer pole may be maintained in a position relative to each for example in an extended state, retracted state, or incrementally thereof.

### II. Summary

The instant invention is a new and improved retaining mechanism for a telescopic pole or poles arrangement for use with pool implements. In an embodiment, the retaining mechanism comprises a housing that covers internal moveable parts and consists of an exposed button to communicate with said internal moveable parts therefor.

The retaining mechanism is biased in a locked position by virtue of a deformable material that communicates with a locking pin by a lever. In a natural state, the locking pin passes through a hole formed through an outer pole and engages with a hole formed on an inner pole, restricting movement of the poles relative each. When the deformable material is compressed, for example by applying pressure to said exposed button, the lever pivots about a fulcrum causing the locking pin to withdraw from the inner pole, thus allowing the inner pole to be moved relative thereto. When the pressure is removed, the retaining mechanism returns to the locked position and causes the locking pin to engage an inner pole upon alignment with a hole.

### III. Brief Description of the Drawings

The invention may take physical form in certain parts and arrangement of parts, some embodiments of which will be described in the specification and illustrated in accompanying drawings which form a part hereof, wherein, when referring to the drawings, the inventor identifies the following components thereto,
FIG. 1 is a plan view of an exterior of an embodiment of an extension pole and retaining mechanism, according to the instant invention.
FIG 2 is a cut out along the lines A-A as identified in FIG 1, of an embodiment of the invention showing the retaining mechanism in a biased, locked position.
FIG. 3 is a cut out along the lines B-B as identified in FIG 2 of an embodiment of the invention showing the retaining mechanism in a biased, locked position.
FIG 4 is a cut out along the lines A-A as identified in FIG 1 of an embodiment of the invention showing the retaining mechanism in an un-locked position.
FIG 5 is a cut out along the lines B-B as identified in FIG 4 of an embodiment of the invention showing the retaining mechanism in an un-locked position.

### IV. Detailed Description of the Invention

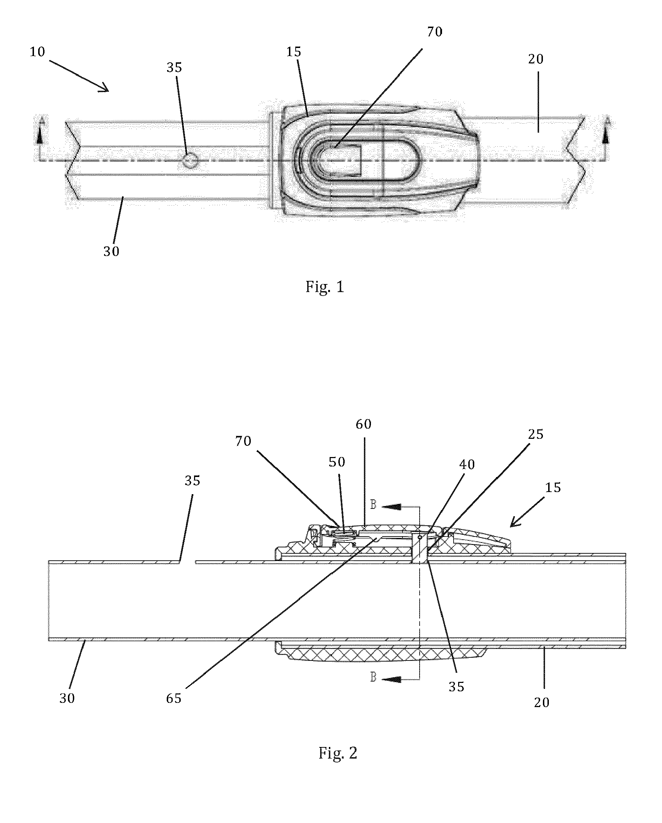

Figure 1 provides an exterior view of an embodiment of a retaining mechanism and extension pole arrangement **10** according to the instant invent. As shown, housing **15** is an encasement that conceals and or protects internal moving parts (not shown) which maintain outer pole **20** and an inner pole **30** in a position relative to each. Button **70** is located on and or accessible from exterior of housing **15** and is used to communicate with internal moveable parts.

Figure 2 shows a cut out of the embodiment provided in Figure 1 along the plane and direction of A-A as indicated showing the internal moveable parts, including a moveable, retaining pin **40** and a deformable material **50.** As shown, inner pole **30** is retained in a position relative to outer pole **20** by virtue of a portion of retaining pin **40** engaged with a hole **35** formed on inner pole **30.** By virtue of this connection, poles **(20, 30)** are retained relative to each. In order to allow multiple lengths of the extension pole, inner pole **30** may comprise a series of holes **35** formed thereon.

As shown, lever **60** is biased at one end by a deformable material **50.** Deformable material **50** includes a spring, but may consist of any similar device that deforms upon compression, and returns to a biased shape once the force is removed. As shown, deformable material **50** invokes a biased force against a first end of lever **60,** opposite button **70.** The biased force causes opposite end of lever **60** to pivot about fulcrum **65** and compel retaining pin **40** through hole **25** and engage hole **35** formed on the inner pole **30.**

As shown, spring **50** connects at one end to an internal base of the encasement **15,** and at another end to the lever, opposite button **70.** Depending on the configuration of the encasement **15** however, deformable material may connect and or communicate directly to the outer wall of outer pole **20.**

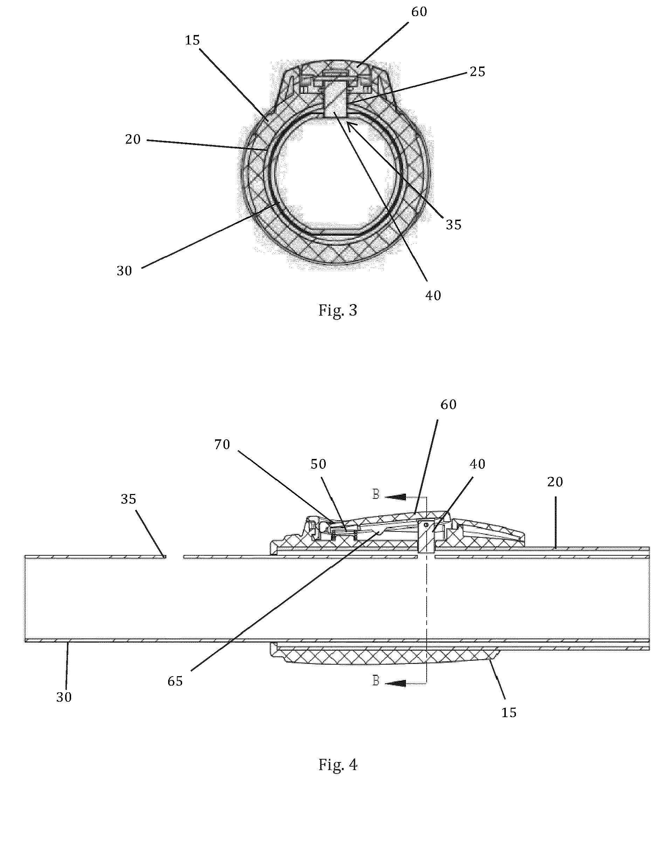

Figure 3 shows a cut out of the embodiment provided in Figure 2 along the plane and direction of B-B as indicated, showing the retaining mechanism in a locked position. As shown, inner pole **30** may comprise an external geometry that restricts axial rotation, providing certainty that an intermittent hole **35** will align with hole **25** and retaining pin **40** will engage the inner pole **30** when aligned thereto.

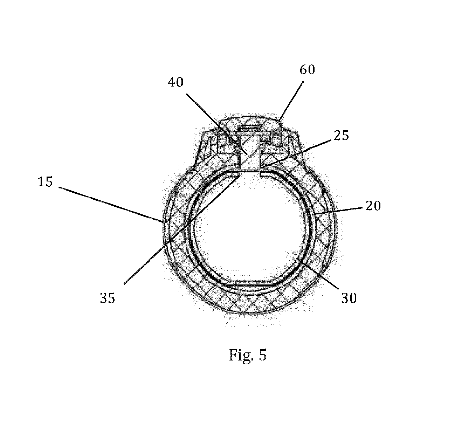

Figure 4 shows a cut out of the embodiment provided in Figure 1 along the plane and direction of A-A as indicated when the mechanism is in an un-locked position. As shown, when force is applied to deformable material **50,** the opposing end of lever **60** pivots about fulcrum **65** and causes retaining pin **40** to withdraw from hole **35** thus unlocking the inner pole **30** so it may extend or retract relative the outer pole **20.** Figure 5 shows a cut out of the embodiment provided in Figure 4 along the plane and direction of B-B as indicated. While the embodiment has been described with reference to preferred embodiments, many modifications and variations will now occur to persons skilled in the art.

## Claims

1. A retaining mechanism for an extension pole comprising,
a outer pole comprising a wall, having an inner diameter, and a hole;
an inner pole comprising a wall, having an outer diameter that is less than the inner diameter of the outer pole, and at least one hole;
a retaining pin shaped and sized to pass through the outer pole hole and engage with at least one hole of said inner pole;
a deformable material;
and a lever that communicates between said deformable material and said retaining pin, such that when said deformable material is compressed, the retaining pin disengages with the hole of said inner pole.

2. The retaining mechanism of claim 1, whereby the deformable material is a spring.

3. The retaining mechanism of claim 1 or 2, whereby the inner pole comprises a series of holes formed therethrough.

4. The retaining mechanism of any preceding claim, whereby the exterior geometry of the inner pole is shaped such that axial rotation of the inner pole relative to the outer pole is prevented.

5. A retaining mechanism for an extension pole comprising,
a housing disposed about an exterior surface of an outer pole, said outer pole having an internal area defined by a wall and at least one hole formed through said wall, whereby the housing contains:
a locking pin shaped and sized to transition through a hole formed through said wall of outer pole between a locked and unlocked position,
a lever connected to said pin,
and a portion of said housing in communication with said lever, such that access to said portion can cause the lever to displace and transition said pin from a locked position to an unlocked position.

6. The retaining mechanism for an extension pole of claim 5, further comprising a fulcrum in communication with said lever, whereby the lever pivots about said fulcrum when the pin transitions between a locked and unlocked position.

7. The retaining mechanism for an extension pole of claim 5 or 6, further comprising an inner pole that is shaped and sized to moveably insert in the internal area of the outer pole and comprises an outer wall that has at least one hole formed there through that is shaped and sized to accept a portion of said locking pin when the pin is in a locked position.

8. The retaining mechanism for an extension pole of claim 5 to 7, wherein the portion of said housing in communication with said lever comprises a button that when pressed displaces said lever contained therein.

9. The retaining mechanism for an extension pole of claim 5 to 7, wherein the portion of said housing in communication with said lever comprises an opening that allows direct access to lever, such that when accessed, the lever displaces.
